# EUROPEAN PATENT APPLICATION

(11) **EP 3 780 666 A1**
(43) Date of publication of application: **17.02.2021**
(21) Application number: 19788231.9
(22) Date of filing: 10.04.2019
(51) Int. Cl.: H04W 4/06, H04W 8/26

(54) **DATA TRANSMISSION METHOD AND APPARATUS**

(30) Priority: 16.04.2018 CN 201810339121
(71) Applicant: HUAWEI TECHNOLOGIES CO., LTD., Shenzhen, Guangdong 518129 (CN)
(72) Inventor: LUO, Jing, Shenzhen, Guangdong 518129 (CN)
(74) Representative: Körber, Martin Hans
(86) International application number: PCT/CN2019/082033
(87) International publication number: WO 2019/201127

(57) **Abstract**

This application provides a data transmission method and an apparatus, and relates to the field of communications technologies. The method includes: receiving, by a wireless communications apparatus, a multicast data packet from a first terminal, where the multicast data packet includes service data and an identifier of a first multicast group; determining, by the wireless communications apparatus, an identifier of a second terminal based on the identifier of the first multicast group and a correspondence between the identifier of the first multicast group and the identifier of the second terminal; and sending, by the wireless communications apparatus, the service data to the second terminal based on the identifier of the second terminal. According to this application, costs of deployment, operation, and maintenance can be reduced.

## Description

### TECHNICAL FIELD

This application relates to the field of communications technologies, and in particular, to a data transmission method and an apparatus.

### BACKGROUND

As the mobile internet develops, mobile video services are developing rapidly. In a radio access network (Radio Access Network, RAN), service data is usually sent to a user terminal in a multicast manner. Currently, the service data is mainly sent to the user terminal by using an evolved multimedia broadcast/multicast service (Evolved Multimedia Broadcast Multicast Services, eMBMS) technology.

To make the RAN network support eMBMS, a module supporting eMBMS needs to be deployed on each of a core network device, a CU, a DU, and a user terminal in the RAN network, to send service data to a plurality of user terminals. Consequently, costs of deployment, operation, and maintenance increase.

### SUMMARY

Embodiments of this application provide a data transmission method and an apparatus, to reduce deployment, operation and maintenance costs. The technical solution is as follows.

According to a first aspect, a data transmission method is provided. A wireless communications apparatus in the method may be an access network device or a chip in an access network device. The method includes:
receiving, by a wireless communications apparatus, a multicast data packet from a first terminal, where the multicast data packet includes service data and an identifier of a first multicast group;
determining, by the wireless communications apparatus, an identifier of a second terminal based on the identifier of the first multicast group and a correspondence between the identifier of the first multicast group and the identifier of the second terminal; and
sending, by the wireless communications apparatus, the service data to the second terminal based on the identifier of the second terminal.

In a possible implementation, the identifier of the first multicast group is an IP address of the first multicast group, and the identifier of the second terminal is an IP address of the second terminal.

In a possible implementation, the sending, by the wireless communications apparatus, the service data to the second terminal based on the identifier of the second terminal includes:
changing, by the wireless communications apparatus, a destination IP address of the multicast data packet to the IP address of the second terminal, to obtain a unicast packet, where the unicast packet includes the service data; and
sending, by the wireless communications apparatus, the unicast packet to the second terminal based on the IP address of the second terminal.

In a possible implementation, the identifier of the first multicast group is an IP address of the first multicast group, and the identifier of the second terminal is a GTP tunnel address of the second terminal; and
the sending the service data to the second terminal includes:
sending the multicast data packet to the second terminal based on the GTP tunnel address of the second terminal.

In a possible implementation, the wireless communications apparatus is a central unit CU.

In a possible implementation, the method further includes:
receiving, by the wireless communications apparatus, a multicast joining packet from the second terminal, where the multicast joining packet includes the identifier of the first multicast group and the identifier of the second terminal; and
adding, by the wireless communications apparatus based on the identifier of the first multicast group and the identifier of the second terminal, the correspondence between the identifier of the first multicast group and the identifier of the second terminal.

In a possible implementation, the method further includes:
receiving, by the wireless communications apparatus, a multicast leaving packet from the second terminal, where the multicast leaving packet includes the identifier of the first multicast group and the identifier of the second terminal; and
deleting, by the wireless communications apparatus based on the identifier of the first multicast group and the identifier of the second terminal, the correspondence between the identifier of the first multicast group and the identifier of the second terminal.

In a possible implementation, there are a plurality of second terminals.

According to a second aspect, a data transmission method is provided. A wireless communications apparatus in the method may be a terminal or a chip in a terminal. The method includes:
determining, by a wireless communications apparatus, a multicast data packet; and
sending, by the wireless communications apparatus, the multicast data packet to an access network device, where the multicast data packet includes service data and an identifier of a first multicast group, and the multicast data packet is to be sent to a member of the first multicast group in a unicast manner.

In a possible implementation, the method further includes:
sending, by the wireless communications apparatus, a multicast joining packet to the access network device, where the multicast joining packet carries the identifier of the first multicast group and an identifier of the wireless communications apparatus, and the multicast joining packet is used for adding the wireless communications apparatus to the first multicast group.

In a possible implementation, the method further includes:
sending, by the wireless communications apparatus, a multicast leaving packet to the access network device, where the multicast leaving packet carries the identifier of the first multicast group and an identifier of the wireless communications apparatus, and the multicast leaving packet is used for deleting the wireless communications apparatus from the first multicast group.

In a possible implementation, there are a plurality of members in the first multicast group.

According to a third aspect, a wireless communications apparatus is provided. The wireless communications apparatus includes:
a first receiving module, configured to receive a multicast data packet from a first terminal, where the multicast data packet includes service data and an identifier of a first multicast group;
a determining module, configured to determine an identifier of a second terminal based on the identifier of the first multicast group and a correspondence between the identifier of the first multicast group and the identifier of the second terminal; and
a sending module, configured to send the service data to the second terminal based on the identifier of the second terminal.

In a possible implementation, the identifier of the first multicast group is an IP address of the first multicast group, and the identifier of the second terminal is an IP address of the second terminal.

In a possible implementation, the sending module is specifically configured to:
change a destination IP address of the multicast data packet to the IP address of the second terminal, to obtain a unicast packet, where the unicast packet includes the service data; and
send the unicast packet to the second terminal based on the IP address of the second terminal.

In a possible implementation, the identifier of the first multicast group is an IP address of the first multicast group, and the identifier of the second terminal is a GTP tunnel address of the second terminal; and
the sending module is specifically configured to:
send the multicast data packet to the second terminal based on the GTP tunnel address of the second terminal.

In a possible implementation, the wireless communications apparatus is a central unit CU.

In a possible implementation, the wireless communications apparatus further includes:
a second receiving module, configured to receive a multicast joining packet from the second terminal, where the multicast joining packet includes the identifier of the first multicast group and the identifier of the second terminal; and
an adding module, configured to add, based on the identifier of the first multicast group and the identifier of the second terminal, the correspondence between the identifier of the first multicast group and the identifier of the second terminal.

In a possible implementation, the wireless communications apparatus further includes:
a third receiving module, configured to receive a multicast leaving packet from the second terminal, where the multicast leaving packet includes the identifier of the first multicast group and the identifier of the second terminal; and
a deletion module, configured to delete, based on the identifier of the first multicast group and the identifier of the second terminal, the correspondence between the identifier of the first multicast group and the identifier of the second terminal.

In a possible implementation, there are a plurality of second terminals.

According to a fourth aspect, a wireless communications apparatus is provided. The wireless communications apparatus includes:
a determining module, configured to determine a multicast data packet; and
a first sending module, configured to send the multicast data packet to an access network device, where the multicast data packet includes service data and an identifier of a first multicast group, and the multicast data packet is to be sent to a member of the first multicast group in a unicast manner.

In a possible implementation, the wireless communications apparatus further includes:
a second sending module, configured to send a multicast joining packet to the access network device, where the multicast joining packet carries the identifier of the first multicast group and an identifier of the wireless communications apparatus, and the multicast joining packet is used for adding the wireless communications apparatus to the first multicast group.

In a possible implementation, the wireless communications apparatus further includes:
a third sending module, configured to send a multicast leaving packet to the access network device, where the multicast leaving packet carries the identifier of the first multicast group and an identifier of the wireless communications apparatus, and the multicast leaving packet is used for deleting the wireless communications apparatus from the first multicast group.

In a possible implementation, there are a plurality of members in the first multicast group.

According to a fifth aspect, an apparatus is provided, including a memory and a processor. The memory is configured to store a computer program, and the processor is configured to invoke the computer program from the memory and execute the computer program, so that the wireless communications apparatus performs the method according to the first aspect.

According to a sixth aspect, a computer storage medium is provided. The computer storage medium stores a program, and the program is used to implement the method according to the first aspect.

In the embodiments of this application, the wireless communications apparatus receives the multicast data packet from the first terminal, where the multicast data packet includes the service data and the identifier of the first multicast group; determines the identifier of the second terminal based on the identifier of the first multicast group and the correspondence between the identifier of the first multicast group and the identifier of the second terminal; and sends the service data to the second terminal based on the identifier of the second terminal. In this way, deployments of modules supporting eMBMS on the wireless communications apparatus and the terminal is not needed, thereby reducing deployment, operation, and maintenance costs.

### BRIEF DESCRIPTION OF DRAWINGS

FIG. 1a is an architectural diagram of a communications network system according to an embodiment of this application;
FIG. 1b is a schematic structural diagram of an access network device according to an embodiment of this application;
FIG. 1c is a schematic structural diagram of a terminal according to an embodiment of this application;
FIG. 2 is a flowchart of a data transmission method according to an embodiment of this application;
FIG. 3 is a flowchart of Embodiment 1 of a data transmission method according to an embodiment of this application;
FIG. 4 is a flowchart of Embodiment 2 of a data transmission method according to an embodiment of this application;
FIG. 5 is a schematic structural diagram of a wireless communications apparatus according to an embodiment of this application;
FIG. 6 is a schematic structural diagram of a wireless communications apparatus according to an embodiment of this application;
FIG. 7 is a schematic structural diagram of a wireless communications apparatus according to an embodiment of this application;
FIG. 8 is a schematic structural diagram of a wireless communications apparatus according to an embodiment of this application;
FIG. 9 is a schematic structural diagram of a wireless communications apparatus according to an embodiment of this application;
FIG. 10 is a schematic structural diagram of a wireless communications apparatus according to an embodiment of this application; and
FIG. 11 is a schematic structural diagram of an apparatus according to an embodiment of this application.

### DESCRIPTION OF EMBODIMENTS

This application provides a data transmission method in a RAN network scenario.

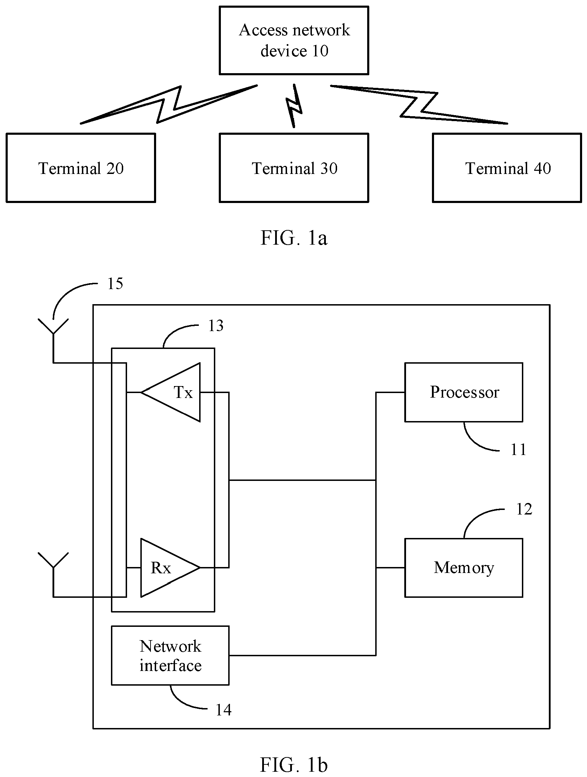

FIG. 1a is an architectural diagram of a communications network system according to an embodiment of this application. The communications network system includes an access network device 10, a terminal 20, a terminal 30, and a terminal 40. The access network device 10 separately performs wireless communication with the terminal 20, the terminal 30, and the terminal 40. The communications system may be a communications system that supports a fourth generation (fourth generation, 4G) access technology, for example, the long term evolution (long term evolution, LTE) access technology. Alternatively, the communications system may be a communications system that supports a fifth generation (fifth generation, 5G) access technology, for example, the new radio (new radio, NR) access technology. Alternatively, the communications system may be a communications system that supports a third generation (third generation, 3G) access technology, for example, the universal mobile telecommunications system (universal mobile telecommunications system, UMTS) access technology. Alternatively, the communications system may be a communications system that supports a second generation (second generation, 2G) access technology, for example, the global system for mobile communications (global system for mobile communications, GSM) access technology. Alternatively, the communications system may be a communications system that supports a plurality of radio technologies, for example, a communications system that supports the LTE technology and the NR technology. In addition, the communications system may further be applicable to a future-oriented communications technology.

The access network device 10 may be a device that is on an access network side and that is configured to support a terminal in accessing the communications system. For example, the access network device 10 may be a base transceiver station (base transceiver station, BTS) or a base station controller (base station controller, BSC) in a 2G access technology communications system, a NodeB (node B) or a radio network controller (radio network controller, RNC) in a 3G access technology communications system, an evolved Node B (evolved nodeB, eNB) in a 4G access technology communications system, or a next generation NodeB (next generation nodeB, gNB), a transmission reception point (transmission reception point, TRP), a relay node (relay node), or an access point (access point, AP) in a 5G access technology communications system.

Each of the terminal 20, the terminal 30, and the terminal 40 may be a device that provides voice connectivity or data connectivity for a user, and, for example, may also be referred to as user equipment (user equipment, UE), a mobile station (mobile station), a subscriber unit (subscriber unit), a station (station), or terminal equipment (terminal equipment, TE). Each of the terminal 20, the terminal 30, and the terminal 40 may alternatively be a cellular phone (cellular phone), a personal digital assistant (personal digital assistant, PDA), a wireless modem (modem), a handheld (handheld) device, a laptop computer (laptop computer), a cordless phone (cordless phone), a wireless local loop (wireless local loop, WLL) station, a tablet (pad), or the like. As wireless communications technologies develop, a device that can access the communications system, a device that can communicate with a network side of the communications system, or a device that can communicate with another object via the communications system each may be a terminal in the embodiments of this application. For example, the terminal may be a terminal or vehicle in intelligent transportation, a household device in a smart home, an electricity meter reading instrument in a smart grid, a voltage monitoring instrument, an environment monitoring instrument, a video surveillance instrument in an intelligent security network, or a cash register.

In the embodiments of this application, the terminals may communicate with an access network device, for example, the access network device 10. The plurality of terminals may also communicate with each other. The terminals may be static and fixed, or may be mobile.

The data transmission method provided in the embodiments of this application may be applied to the foregoing communications system. A control module and a traffic offload (Traffic Offload, TOF) module may be disposed in the access network device 10. The TOF module is configured to identify a multicast data packet and a multicast control packet, forward the multicast data packet and the multicast control packet to the control module, and meanwhile send a multicast data packet sent by the control module to a terminal. The control module may be an internet group management protocol controller (Internet Group Management Protocol controller), and is configured to establish and maintain a multicast mapping table based on the multicast control packet, and process the received multicast data packet forwarded by the TOF module.

When the terminal needs to receive service data of a multicast group, the terminal may send a multicast joining packet to the access network device 10, to join the multicast group. After receiving the multicast joining packet sent by the terminal, the access network device 10 may maintain a multicast mapping table based on the multicast joining packet. In addition, when receiving service data sent by the terminal, the access network device 10 may send the service data to a corresponding terminal based on the multicast mapping table.

FIG. 1b is a schematic structural diagram of an access network device. For a structure of the access network device 10, refer to the structure shown in FIG. 1a.

The access network device 10 includes at least one processor 11, at least one memory 12, at least one transceiver 13, at least one network interface 14, and one or more antennas 15. The processor 11, the memory 12, the transceiver 13, and the network interface 14 are connected, for example, through a bus. The antennas 15 are connected to the transceiver 13. The network interface 14 is configured to enable the access network device 10 to be connected to another communications device through a communications link. For example, the access network device 10 is connected to a core network element 101 through an S1 interface. In the embodiments of this application, a connection may be implemented by using various interfaces, transmission lines, buses, or the like. This is not limited in the embodiments.

Processors in the embodiments of this application, for example, the processor 11, may include at least one of the following types: a general-purpose central processing unit (Central Processing Unit, CPU), a digital signal processor (Digital Signal Processor, DSP), a microprocessor, an application-specific integrated circuit (Application-Specific Integrated Circuit, ASIC), a microcontroller unit (Microcontroller Unit, MCU), a field programmable gate array (Field Programmable Gate Array, FPGA), or an integrated circuit configured to implement a logical operation. For example, the processor 11 may be a single-CPU (single-CPU) processor or a multi-CPU (multi-CPU) processor. The at least one processor 11 may be integrated into one chip or located on a plurality of different chips.

Memories in the embodiments of this application, for example, the memory 12, may include at least one of the following types: a read-only memory (read-only memory, ROM) or another type of static storage device that can store static information and instructions, a random access memory (random access memory, RAM) or another type of dynamic storage device that can store information and instructions, or an electrically erasable programmable read-only memory (Electrically erasable programmable read-only memory, EEPROM). In some scenarios, a memory may alternatively be a compact disc read-only memory (compact disc read-only memory, CD-ROM) or another compact disc memory, an optical disc memory (including a compact disc, a laser disc, an optical disc, a digital versatile disc, a Blu-ray disc, and the like), a magnetic disk storage medium or another magnetic storage device, or any other medium that can carry or store expected program code in a form of an instruction or a data structure and that can be accessed by a computer. However, this is not limited thereto.

The memory 12 may exist independently, and is connected to the processor 11. Optionally, the memory 12 may be integrated with the processor 11, for example, into a chip. The memory 12 can store program code for implementing the technical solutions in the embodiments of this application, and the processor 11 controls execution of the program code. Various executed computer program code may also be considered as a driver of the processor 11. For example, the processor 11 is configured to execute the computer program code stored in the memory 12, to implement the technical solutions in the embodiments of this application.

The transceiver 13 may be configured to support radio frequency signal receiving or sending between the access network device 10 and a terminal, and the transceiver 13 may be connected to the antennas 15. The transceiver 13 includes a transmitter Tx and a receiver Rx. Specifically, the one or more antennas 15 may receive a radio frequency signal, and the receiver Rx of the transceiver 13 is configured to receive the radio frequency signal from the antennas, convert the radio frequency signal into a digital baseband signal or a digital intermediate frequency signal, and provide the digital baseband signal or the digital intermediate frequency signal to the processor 11, so that the processor 11 further processes, for example, demodulates and decodes the digital baseband signal or the digital intermediate frequency signal. In addition, the transmitter Tx in the transceiver 13 is further configured to receive a modulated digital baseband signal or a modulated digital intermediate frequency signal from the processor 11, convert the modulated digital baseband signal or the modulated digital intermediate frequency signal into a radio frequency signal, and send the radio frequency signal by using the one or more antennas 15. Specifically, the receiver Rx may selectively perform one-level or multi-level down-conversion mixing and analog-to-digital conversion on the radio frequency signal to obtain the digital baseband signal or the digital intermediate frequency signal. A sequence of the down-conversion mixing and the analog-to-digital conversion may be adjusted. The transmitter Tx may selectively perform one-level or multi-level up-conversion mixing and digital-to-analog conversion on the modulated digital baseband signal or the modulated digital intermediate frequency signal, to obtain the radio frequency signal. A sequence of the up-conversion mixing and the digital-to-analog conversion may be adjusted. The digital baseband signal and the digital intermediate frequency signal may be collectively referred to as digital signals.

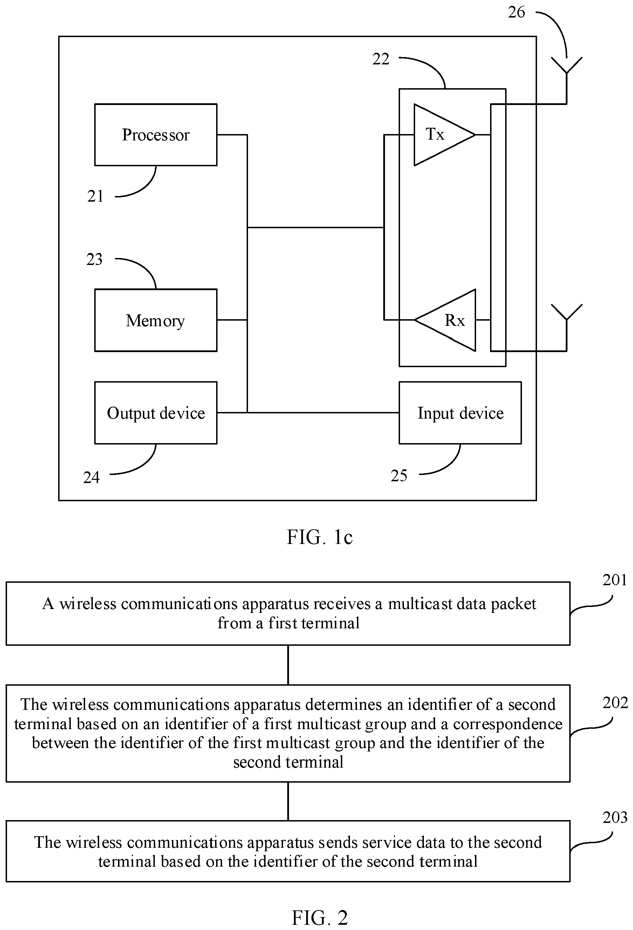

FIG. 1c is a schematic structural diagram of a terminal according to an embodiment of this application. For structures of the terminal 20, the terminal 30, and the terminal 40, refer to the structure shown in FIG. 1c.

The terminal includes at least one processor 21, at least one transceiver 22, and at least one memory 23. The processor 21, the memory 23, and the transceiver 22 are connected. Optionally, the terminal 20 may further include an output device 24, an input device 25, and one or more antennas 26. The antennas 26 are connected to the transceiver 22. The output device 24 and the input device 25 are connected to the processor 21.

For the transceiver 22, the memory 23, and the antennas 26, refer to related descriptions in FIG. 1b, and similar functions may be implemented.

The processor 21 may be a baseband processor, or may be a CPU. The baseband processor and the CPU may be integrated or separated.

The processor 21 may be configured to implement various functions for the terminal, for example, configured to process a communications protocol and communication data; or configured to control the entire terminal device, execute a software program, and process data of the software program; or configured to assist in completing a computing processing task, such as graphics and image processing or audio processing. Alternatively, the processor 21 is configured to implement one or more of the foregoing functions.

The output device 24 communicates with the processor 21, and may display information in a plurality of manners. For example, the output device 24 may be a liquid crystal display (Liquid Crystal Display, LCD), a light emitting diode (Light Emitting Diode, LED) display device, a cathode ray tube (Cathode Ray Tube, CRT) display device, or a projector (projector). The input device 25 communicates with the processor 21, and may receive user input in a plurality of manners. For example, the input device 25 may be a mouse, a keyboard, a touchscreen device, or a sensor device.

An embodiment of this application provides a data transmission method, to reduce deployment, operation, and maintenance costs. As shown in FIG. 2, specific processing procedures are as follows.

A wireless communications apparatus in FIG. 2 may be the access network device 11 or a chip in the access network device 11. A first terminal may be the terminal 20, the terminal 30, or the terminal 40.

Step 201: The wireless communications apparatus receives a multicast data packet from the first terminal.

The multicast data packet includes service data and an identifier of a first multicast group.

During implementation, when the first terminal sends the service data to another terminal in the first multicast group, the first terminal may encapsulate the service data by using an internet protocol (Internet Protocol, IP) address of the first terminal as a source address and using a multicast address of the first multicast group as a destination address, to obtain the multicast data packet, and send the multicast data packet to the wireless communications apparatus. The multicast data packet includes the service data and the identifier of the first multicast group. The identifier of the first multicast group is the multicast address of the first multicast group.

After receiving the multicast data packet, the wireless communications apparatus may obtain the identifier of the first multicast group carried in the multicast data packet.

S202: The wireless communications apparatus determines an identifier of a second terminal based on the identifier of the first multicast group and a correspondence between the identifier of the first multicast group and the identifier of the second terminal.

During implementation, the correspondence between the identifier of the first multicast group and the identifier of the second terminal may be stored in the wireless communications apparatus. The correspondence may be set by technical personnel, or may be established and maintained by the wireless communications apparatus based on a multicast control packet (for example, a multicast joining packet or a multicast leaving packet) sent by the terminal. This embodiment of the present invention subsequently describes in detail specific processing procedures of establishing and maintaining a multicast mapping table by the wireless communications apparatus based on the multicast control packet sent by the terminal. This is not described herein.

After obtaining the identifier of the first multicast group, the wireless communications apparatus may query, in the foregoing correspondence, the identifier that is of the second terminal and that corresponds to the identifier of the first multicast group.

Optionally, there are a plurality of second terminals.

Step 203: The wireless communications apparatus sends the service data to the second terminal based on the identifier of the second terminal.

During implementation, after obtaining the identifier of the second terminal corresponding to the first multicast group, the wireless communications apparatus may send the service data to the second terminal based on the identifier of the second terminal. There may be various specific implementations. This embodiment of the present invention provides two feasible implementations.

Manner 1: When the identifier of the first multicast group is an internet protocol IP address of the first multicast group, and the identifier of the second terminal is an IP address of the second terminal, specific processing procedures of step 202 are as follows:

Step 1: The wireless communications apparatus changes a destination IP address of the multicast data packet to the IP address of the second terminal, to obtain a unicast packet.

The unicast packet includes the service data.

During implementation, after obtaining the IP address of the second terminal corresponding to the first multicast group, the wireless communications apparatus may change the destination address of the multicast data packet to the IP address of the second terminal, to obtain the unicast packet.

It should be noted that, when there are a plurality of second terminals, the wireless communications apparatus needs to copy the multicast data packet, and then change a destination address of each multicast data packet. For example, the destination address of the multicast data packet is 224.0.1.1, and IP addresses of the second terminals are 192.168.1.1, 192.168.1.2, and 192.168.1.3. In this case, the wireless communications apparatus needs to make three copies of the multicast data packet, change a destination address of a first multicast data packet to 192.168.1.1, change a destination address of a second multicast data packet to 192.168.1.2, and change a destination address of a third multicast data packet to 192.168.1.3.

Step 2: The wireless communications apparatus sends the unicast packet to the second terminal based on the IP address of the second terminal.

During implementation, after obtaining the unicast packet, the wireless communications apparatus may send the unicast packet to the corresponding second terminal based on a destination IP address of the unicast packet.

Manner 2: When the identifier of the first multicast group is an IP address of the first multicast group, and the identifier of the second terminal is a GTP tunnel address of the second terminal, a specific processing procedure of step 202 is as follows:
sending the multicast data packet to the second terminal based on the GTP tunnel address of the second terminal.

During implementation, after obtaining the GTP tunnel address of the second terminal corresponding to the first multicast group, the wireless communications apparatus may send the multicast data packet to the second terminal based on the GTP tunnel address of the second terminal.

Optionally, the wireless communications apparatus is a central unit CU.

Optionally, this embodiment of the present invention further provides a method for maintaining a correspondence between a multicast group and a terminal. When a terminal (which may be referred to as a second terminal) needs to join a multicast group (that is, the first multicast group), procedures of processing performed by the wireless communications apparatus may be as follows.

Step 1: The wireless communications apparatus receives a multicast joining packet from the second terminal.

The multicast joining packet includes the identifier of the first multicast group and the identifier of the second terminal. The second terminal may be the same as or different from the first terminal.

During implementation, technical personnel may preset, on the second terminal, an application used to send the multicast joining packet. When the second terminal needs to receive service data of the first multicast group, the second terminal may send the multicast joining packet to the wireless communications apparatus by using the application. The multicast joining packet carries the identifier of the first multicast group and the identifier of the second terminal. After receiving the multicast joining packet, the wireless communications apparatus obtains the identifier of the first multicast group and the identifier of the second terminal that are carried in the multicast joining packet.

Step 2: The wireless communications apparatus adds, based on the identifier of the first multicast group and the identifier of the second terminal, the correspondence between the identifier of the first multicast group and the identifier of the second terminal.

During implementation, after obtaining the identifier of the first multicast group and the identifier of the second terminal that are carried in the multicast joining packet, the wireless communications apparatus may query whether the correspondence between the identifier of the first multicast group and the identifier of the second terminal exists in correspondences between identifiers of multicast groups and identifier of terminals. If the correspondence between the identifier of the first multicast group and the identifier of the second terminal exists in the correspondences between identifiers of multicast groups and identifiers of terminals, no processing is performed. If the correspondence between the identifier of the first multicast group and the identifier of the second terminal does not exist in the correspondences between identifiers of multicast groups and identifiers of terminals, the wireless communications apparatus adds the correspondence between the identifier of the first multicast group and the identifier of the second terminal to the correspondences between identifiers of multicast groups and identifiers of terminals.

Optionally, this embodiment of the present invention further provides a method for maintaining a correspondence between a multicast group and a terminal. When a terminal (which may be referred to as a second terminal) needs to leave a multicast group (that is, the first multicast group), procedures of processing performed by the wireless communications apparatus may be as follows.

Step 1: The wireless communications apparatus receives a multicast leaving packet from the second terminal.

The multicast leaving packet includes an identifier of the first multicast group and the identifier of the second terminal.

The second terminal may be the same as or different from the first terminal.

During implementation, when the second terminal does not need to receive service data of the first multicast group, the second terminal may send the multicast leaving packet to the wireless communications apparatus by using an application. The multicast leaving packet carries the identifier of the first multicast group and the identifier of the second terminal. After receiving the multicast leaving packet, the wireless communications apparatus obtains the identifier of the first multicast group and the identifier of the second terminal that are carried in the multicast leaving packet.

Step 2: The wireless communications apparatus deletes, based on the identifier of the first multicast group and the identifier of the second terminal, the correspondence between the identifier of the first multicast group and the identifier of the second terminal.

During implementation, after obtaining the identifier of the first multicast group and the identifier of the second terminal that are carried in the multicast leaving packet, the wireless communications apparatus may query whether the correspondence between the identifier of the first multicast group and the identifier of the second terminal exists in correspondences between identifiers of multicast groups and identifier of terminals. If the correspondence between the identifier of the first multicast group and the identifier of the second terminal exists in the correspondences between identifiers of multicast groups and identifiers of terminals, the wireless communications apparatus deletes the correspondence between the identifier of the first multicast group and the identifier of the second terminal from the correspondences between identifiers of multicast groups and identifiers of terminals. If the correspondence between the identifier of the first multicast group and the identifier of the second terminal does not exist in the correspondences between identifiers of multicast groups and identifiers of terminals, no processing is performed.

An embodiment of this application further provides a data transmission method, to reduce deployment, operation, and maintenance costs. The wireless communications apparatus may be the terminal 20, the terminal 30, or the terminal 40. Alternatively, the wireless communications apparatus may be a chip in the terminal 20, a chip in the terminal 30, or a chip in the terminal 40. The access network device may be the access network device 10. Specific processing procedures are as follows:

The wireless communications apparatus determines a multicast data packet, sends the multicast data packet to the access network device, where the multicast data packet includes service data and an identifier of a first multicast group, and the multicast data packet is to be sent to a member of the first multicast group in a unicast manner.

During implementation, when the wireless communications apparatus sends the service data to another terminal in the first multicast group, the wireless communications apparatus may encapsulate the service data by using an address of the wireless communications apparatus as a source address and using a multicast address of the first multicast group as a destination address, to obtain the multicast data packet, and sends the multicast data packet to the access network device. The identifier of the first multicast group is the address of the first multicast group.

Processing procedures in which the access network device sends the multicast data packet to the member of the first multicast group in the unicast manner is similar to the foregoing step 202 to step 203. Details are not described in the present invention again.

Optionally, there are a plurality of members in the first multicast group.

Optionally, the wireless communications apparatus sends a multicast joining packet to the access network device, where the multicast joining packet carries the identifier of the first multicast group and an identifier of the wireless communications apparatus, and the multicast joining packet is used for adding the wireless communications apparatus to the first multicast group.

During implementation, when the wireless communications apparatus needs to receive service data of the first multicast group, the wireless communications apparatus may send the multicast joining packet to the access network device. The multicast joining packet carries the identifier of the first multicast group and an identifier of a first terminal. Specific processing procedures in which the access network device adds a correspondence between the identifier of the first multicast group and the identifier of the wireless communications apparatus to correspondences between identifiers of multicast groups and identifiers of terminals is similar to the specific processing procedures of the foregoing method for maintaining a correspondence between a multicast group and a terminal. Details are not described in the present invention again.

Optionally, the wireless communications apparatus sends a multicast leaving packet to the access network device, where the multicast leaving packet carries the identifier of the first multicast group and an identifier of the wireless communications apparatus, and the multicast leaving packet is used for deleting the wireless communications apparatus from the first multicast group.

During implementation, when the wireless communications apparatus does not need to receive service data of the first multicast group, the wireless communications apparatus may send the multicast leaving packet to the access network device. The multicast leaving packet carries the identifier of the first multicast group and an identifier of a first terminal. Specific processing procedures in which the access network device deletes a correspondence between the identifier of the first multicast group and the identifier of the wireless communications apparatus from correspondences between identifiers of multicast groups and identifiers of terminals is similar to the specific processing procedures of the foregoing method for maintaining a correspondence between a multicast group and a terminal. Details are not described in the present invention again.

In the embodiments of this application, the access network device receives the multicast data packet from the wireless communications apparatus, where the multicast data packet includes the service data and the identifier of the first multicast group; determines the identifier of the second terminal based on the identifier of the first multicast group and the correspondence between the identifier of the first multicast group and the identifier of the second terminal; and sends the service data to the second terminal based on the identifier of the second terminal. In this way, deployments of modules supporting eMBMS on the wireless communications apparatus and the terminal is not needed, thereby reducing deployment, operation, and maintenance costs.

The embodiments of the present invention provide two specific embodiments, which are specifically as follows.

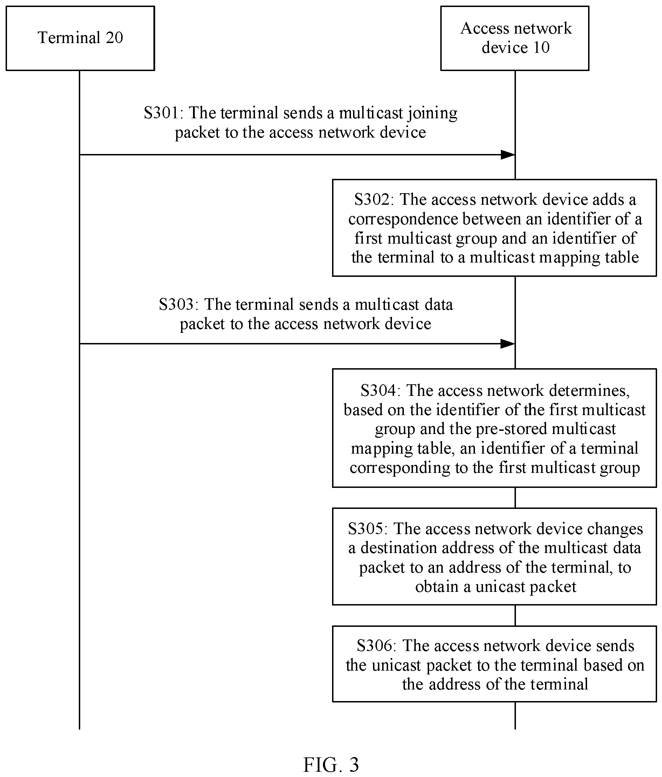

Embodiment 1: As shown in FIG. 1a and FIG. 3, specific processing procedures are as follows.

Step 301: A terminal 20 sends a multicast joining packet to an access network device 10.

The multicast joining packet may carry an identifier of a first multicast group and an identifier of the terminal 20. The identifier of the first multicast group may be a multicast address of the first multicast group, and the identifier of the terminal 20 may be an IP address of the terminal 20.

During implementation, a program used to send the multicast joining packet is preset on the terminal 20. When the terminal 20 needs to join the first multicast group, the terminal 20 may send the multicast joining packet to the access network device 10 by using the program. For the multicast joining packet, a source address may be the IP address of the terminal 20, a destination address may be the multicast address of the first multicast group, a protocol type may be the IGMP protocol, and a multicast type identifier may be 0x16 (that is, a multicast joining packet). The multicast joining packet carries the identifier of the first multicast group and the identifier of the terminal 20.

After receiving the multicast joining packet, a TOF module of the access network device 10 may determine whether the destination address of the multicast joining packet is the multicast address. If the destination address of the multicast joining packet is the multicast address, the TOF module forwards the multicast joining packet to a control module. The control module parses the multicast joining packet to obtain the identifier of the first multicast group and the identifier of the terminal 20 that are carried in the multicast joining packet. The destination address of the multicast joining packet may be the multicast address of the first multicast group (for example, 224.0.1.1), or may be a multicast address of a permanent multicast group (224.0.0.1). This is not limited in this application.

Step 302: The access network device 10 adds a correspondence between the identifier of the first multicast group and an identifier of the terminal 20 to a multicast mapping table.

During implementation, after obtaining the identifier of the first multicast group and the identifier of the terminal 20 that are carried in the multicast joining packet, the control module of the access network device 10 may query whether the correspondence between the identifier of the first multicast group and the identifier of the terminal 20 exists in the multicast mapping table. If the correspondence between the identifier of the first multicast group and the identifier of the terminal 20 exists in the multicast mapping table, no processing is performed. If the correspondence between the identifier of the first multicast group and the identifier of the terminal 20 does not exist in the multicast mapping table, the access network device 10 adds the correspondence between the identifier of the first multicast group and the identifier of the terminal 20 to the multicast mapping table. The identifier of the terminal 20 is the address of the terminal 20. For example, as shown in Table 1, the multicast mapping table stores a mapping relationship between the address of the first multicast group (that is, 224.0.1.1) and an address of a terminal 30 (that is, 192.168.1.2), and a mapping relationship between the address of the first multicast group (that is, 224.0.1.1) and an address of a terminal 40 (that is, 192.168.1.3). After obtaining the identifier of the first multicast group (that is, 224.0.1.1) and the identifier of the terminal 20 (192.168.1.1) that are carried in the multicast joining packet, the control module may correspondingly save, in the mapping table, the address of the first multicast group and the address of the terminal 20.

**Table 1**

| Multicast group address | Terminal address |
|---|---|
| 224.0.1.1 | 192.168.1.2 |
| 224.0.1.1 | 192.168.1.3 |

Step 303: The access network device 10 receives a multicast data packet sent by the terminal 20.

During implementation, a program used to send the multicast data packet may be preset on the terminal 20. When the terminal 20 sends service data to another terminal in the first multicast group, the terminal 20 may encapsulate, by using the program, the service data by using the IP address of the terminal 20 as a source address and using the address of the first multicast group as a destination address, to obtain a multicast data packet, and send the multicast data packet to the access network device 10.

After receiving the multicast data packet, the TOF module of the access network device 10 may determine whether the destination address of the multicast data packet is the multicast address. If the destination address of the multicast data packet is the multicast address, the TOF module may forward the multicast data packet to the control module.

It should be noted that when the terminal 20 sends the multicast data packet to the first multicast group, the terminal 12 may be a multicast member of the first multicast group, or may not be a multicast member of the first multicast group. This is not limited in this application.

Step 304: The access network 10 determines, based on the identifier of the first multicast group and the pre-stored multicast mapping table, an identifier of a terminal corresponding to the first multicast group.

The multicast mapping table includes a correspondence between an identifier of a multicast group and an identifier of a terminal.

During implementation, after receiving the multicast data packet, the control module of the access network device 10 may parse the multicast data packet to obtain the identifier of the first multicast group. Then, the control module may query whether an entry including the identifier of the first multicast group exists in the multicast mapping table. If an entry including the identifier of the first multicast group exists in the multicast mapping table, the control module obtains the identifier of the terminal 20 corresponding to the first multicast group. There may be a plurality of terminals corresponding to the first multicast group.

Step 305: The access network device 10 changes the destination address of the multicast data packet to an address of the terminal, to obtain a unicast packet.

The unicast packet carries the to-be-transmitted service data.

During implementation, after obtaining the address of the terminal corresponding to the first multicast group, the control module of the access network device 10 may change the destination address of the multicast data packet to the address of the terminal, to obtain the unicast packet. Then, the control module may send the unicast packet to the TOF module.

It should be noted that, when there are a plurality of terminals, the control module of the access network device 10 needs to copy the multicast data packet, and then change a destination address of each multicast data packet. For example, the destination address of the multicast data packet is 224.0.1.1, and the addresses of the terminal 20, the terminal 30, and the terminal 40 are 192.168.1.1, 192.168.1.2, and 192.168.1.3 respectively. In this case, the access network device 10 needs to make three copies of the multicast data packet, change a destination address of a first multicast data packet to 192.168.1.1, change a destination address of a second multicast data packet to 192.168.1.2, and change a destination address of a third multicast data packet to 192.168.1.3.

Step 306: The access network device 10 sends the unicast packet to the terminal based on the address of the terminal.

During implementation, after receiving the unicast packet, the TOF module of the access network device 10 may forward, based on the destination address of the unicast packet, the unicast packet to the corresponding terminal through a unicast channel. In this way, the access network device 10 converts the multicast data packet into the unicast data packet, and sends the unicast packet to the terminal through the unicast channel of the access network device 10, to resolve a problem that when a multicast data packet is sent to a terminal through a broadcast channel, an amount of sent data is small because of limited bandwidth of the broadcast channel.

Compared with the existing eMBMS technology, in this embodiment of this application, multicast communication between terminals is supported. In addition, deployment of modules supporting eMBMS on the access network device 10 and the terminal is not needed, thereby reducing deployment, operation, and maintenance costs.

Optionally, when the terminal 20 needs to leave a second multicast group, procedures of processing performed by the access network device 10 may be as follows.

Step 1: The access network device 10 receives a multicast leaving packet that corresponds to the second multicast group and that is sent by the terminal 20.

The multicast leaving packet may carry an identifier of the second multicast group and the identifier of the terminal 20.

During implementation, when the terminal 20 does not need to receive service data of the second multicast group, the terminal 20 may send the multicast leaving packet to the access network device 10 by using an application. For the multicast leaving packet, a source address may be the IP address of the terminal 20, a destination address may be 224.0.0.2, a protocol type may be the IGMP protocol, and a multicast type identifier may be 0x17 (that is, a multicast leaving packet). The multicast leaving packet carries the identifier of the second multicast group and the identifier of the terminal 20. After receiving the multicast leaving packet, the TOF module of the access network device 10 may determine whether the destination address of the multicast leaving packet is the multicast address. If the destination address of the multicast leaving packet is the multicast address, the TOF module forwards the multicast leaving packet to the control module. The control module parses the multicast leaving packet to obtain the identifier of the second multicast group and the identifier of the terminal 20 that are carried in the multicast leaving packet.

Step 2: The access network device 10 deletes a correspondence between the identifier of the second multicast group and the identifier of the terminal 20 from a multicast mapping table.

During implementation, after obtaining the identifier of the second multicast group and the identifier of the terminal 20 that are carried in the multicast leaving packet, the control module of the access network device 10 may query whether the correspondence between the identifier of the second multicast group and the identifier of the terminal 20 exists in the multicast mapping table. If the correspondence between the identifier of the second multicast group and the identifier of the terminal 20 does not exist in the multicast mapping table, no processing is performed. If the correspondence between the identifier of the second multicast group and the identifier of the terminal 20 exists in the multicast mapping table, the access network device 10 deletes the correspondence between the identifier of the second multicast group and the identifier of the terminal 20 from the multicast mapping table. The identifier of the terminal 20 is the address of the terminal 20. For example, as shown in Table 2, the multicast mapping table stores a mapping relationship between the address of the second multicast group (that is, 224.0.1.2) and the address of the terminal 20 (that is, 192.168.1.1), a mapping relationship between the address of the second multicast group (that is, 224.0.1.2) and an address of the terminal 30 (that is, 192.168.1.2), and a mapping relationship between the address of the second multicast group (that is, 224.0.1.2) and an address of the terminal 40 (that is, 192.168.1.3). After obtaining the identifier of the second multicast group (that is, 224.0.1.2) and the identifier of the terminal 20 (that is, 192.168.1.1) that are carried in the multicast leaving packet, the control module may delete the correspondence between the address of the second multicast group and the address of the terminal 20.

**Table 2**

| Multicast group address | Terminal address |
|---|---|
| 224.0.1.2 | 192.168.1.2 |
| 224.0.1.2 | 192.168.1.3 |
| 224.0.1.2 | 192.168.1.1 |

It should be noted that, the access network device 10 may include a DU and a CU, and the data transmission method provided in this embodiment of this application may be applied to the CU, or may be applied to the DU. When the method is applied to the CU, tunnel encapsulation needs to be performed on a packet transmitted between the DU and the CU. A GTP tunnel protocol or another tunnel protocol may be selected for tunnel encapsulation. This is not limited in this application. Specifically, processing procedures of packet transmission between the DU and the CU are as follows.

When a terminal sends a multicast control packet (for example, a multicast joining packet or a multicast leaving packet) to the DU, after receiving the multicast control packet, the DU may perform tunnel encapsulation on the multicast control packet according to a preset tunnel encapsulation policy to obtain a tunnel packet, and send the tunnel packet to the CU. After receiving the tunnel packet, a TOF module of the CU performs tunnel decapsulation on the tunnel packet to obtain the multicast control packet, and sends the multicast control packet to a control module.

Similarly, when the terminal sends a multicast data packet to the DU, after receiving the multicast data packet, the DU performs tunnel encapsulation on the multicast data packet according to the preset tunnel encapsulation policy to obtain a tunnel packet, and sends the tunnel packet to the CU. After receiving the tunnel packet, the TOF module of the CU performs tunnel decapsulation on the tunnel packet to obtain the multicast data packet, and sends the multicast data packet to the control module.

Similarly, after generating a unicast packet based on the multicast data packet, the control module of the CU may further determine, based on a destination address of the unicast packet, a corresponding DU and a tunnel encapsulation policy corresponding to the DU. Then, the control module may perform tunnel encapsulation on the unicast packet according to the tunnel encapsulation policy, to obtain a tunnel packet, and send the tunnel packet to the TOF module. After receiving the tunnel packet, the TOF module may send the tunnel packet to the corresponding DU based on a destination address of the tunnel packet. After receiving the tunnel packet, the DU may perform tunnel decapsulation processing on the tunnel packet, to obtain the unicast packet, and send, through a unicast channel, the unicast packet to a corresponding terminal based on the destination address of the unicast packet.

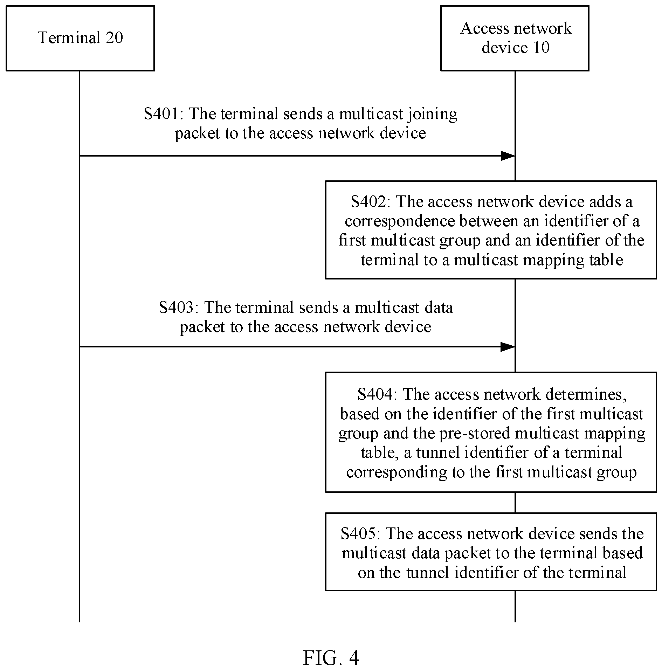

Embodiment 2: As shown in FIG. 1a and FIG. 4, specific processing procedures are as follows.

Step 401: A terminal 20 sends a multicast joining packet to an access network device 10.

The multicast joining packet may carry an identifier of a first multicast group and an identifier of the terminal 20. The identifier of the first multicast group may be a multicast address of the first multicast group, and the identifier of the terminal 20 may be an IP address of the terminal 20.

During implementation, a program used to send the multicast joining packet is preset on the terminal 20. When the terminal 20 needs to join the first multicast group, the terminal 20 may send the multicast joining packet to the access network device 10 by using the program. For the multicast joining packet, a source address may be the IP address of the terminal 20, a destination address may be the multicast address of the first multicast group, a protocol type may be the IGMP protocol, and a multicast type identifier may be 0x16 (that is, a multicast joining packet). The multicast joining packet carries the identifier of the first multicast group and the identifier of the terminal 20.

After receiving the multicast joining packet, a TOF module of the access network device 10 may determine whether the destination address of the multicast joining packet is the multicast address. If the destination address of the multicast joining packet is the multicast address, the TOF module forwards the multicast joining packet to a control module. The control module parses the multicast joining packet to obtain the identifier of the first multicast group and the identifier of the terminal 20 that are carried in the multicast joining packet. The destination address of the multicast joining packet may be the multicast address of the first multicast group (for example, 224.0.1.1), or may be a multicast address of a permanent multicast group (224.0.0.1). This is not limited in this application.

Step 402: The access network device 10 adds a correspondence between the identifier of the first multicast group and an identifier of the terminal 20 to a multicast mapping table.

During implementation, the control module of the access network device 10 may pre-store an identifier mapping table between an identifier of a terminal and a tunnel identifier of the terminal. After obtaining the identifier of the first multicast group and the identifier of the terminal 20 that are carried in the multicast joining packet, the control module of the access network device 10 may query, in the identifier mapping table based on the identifier of the terminal 20, a tunnel identifier corresponding to the identifier of the terminal 20. Then, the control module may query whether a correspondence between the identifier of the first multicast group and the tunnel identifier of the terminal 20 exists in the multicast mapping table. If the correspondence between the identifier of the first multicast group and the tunnel identifier of the terminal 20 exists in the multicast mapping table, no processing is performed. If the correspondence between the identifier of the first multicast group and the tunnel identifier of the terminal 20 does not exist in the multicast mapping table, the control module adds the correspondence between the identifier of the first multicast group and the tunnel identifier of the terminal 20 to the multicast mapping table. The identifier of the terminal 20 is the address of the terminal 20. For example, as shown in Table 3, the multicast mapping table stores a mapping relationship between the address of the first multicast group (that is, 224.0.1.1) and a tunnel identifier of a terminal 30 (that is, telnet 2), and a mapping relationship between the address of the first multicast group (that is, 224.0.1.1) and a tunnel identifier of a terminal 40 (that is, telnet 3). After obtaining the identifier of the first multicast group (that is, 224.0.1.1) carried in the multicast joining packet and the tunnel identifier of the terminal 20 (telnet 1), the control module may correspondingly save, in the mapping table, the address of the first multicast group and the tunnel identifier of the terminal 20.

**Table 3**

| Multicast group address | Terminal tunnel identifier |
|---|---|
| 224.0.1.1 | telnet 2 |
| 224.0.1.1 | telnet 3 |

Step 403: The access network device 10 receives a multicast data packet sent by the terminal 20.

During implementation, a program used to send the multicast data packet may be preset on the terminal 20. When the terminal 20 sends service data to another terminal in the first multicast group, the terminal 20 may encapsulate, by using the program, the service data by using the IP address of the terminal 20 as a source address and using the address of the first multicast group as a destination address, to obtain a multicast data packet, and send the multicast data packet to the access network device 10.

After receiving the multicast data packet, the TOF module of the access network device 10 may determine whether the destination address of the multicast data packet is the multicast address. If the destination address of the multicast data packet is the multicast address, the TOF module may forward the multicast data packet to the control module.

It should be noted that when the terminal 20 sends the multicast data packet to the first multicast group, the terminal 20 may be a multicast member of the first multicast group, or may be a multicast member of another multicast group. This is not limited in this application.

Step 404: The access network 10 determines, based on the identifier of the first multicast group and the pre-stored multicast mapping table, a tunnel identifier of a terminal corresponding to the first multicast group.

The multicast mapping table includes a correspondence between an identifier of a multicast group and a tunnel identifier of a terminal.

During implementation, after receiving the multicast data packet, the control module of the access network device 10 may parse the multicast data packet to obtain the identifier of the first multicast group. Then, the control module may query whether an entry including the identifier of the first multicast group exists in the multicast mapping table. If an entry including the identifier of the first multicast group exists in the multicast mapping table, the control module obtains the tunnel identifier of the terminal 20 corresponding to the first multicast group. There may be a plurality of terminals corresponding to the first multicast group.

Step 405: The access network device 10 sends the multicast data packet to the terminal based on the tunnel identifier of the terminal.

During implementation, after obtaining the tunnel identifier of the terminal corresponding to the first multicast group, the control module of the access network device 10 may send the multicast data packet and the tunnel identifier of the terminal to the TOF module.

After receiving the multicast data packet and the tunnel identifier of the terminal, the TOF module may forward the multicast data packet to the corresponding terminal through a unicast channel based on the tunnel identifier of the terminal. In this way, the access network device 10 sends the multicast data packet to the terminal through the unicast channel, to resolve a problem that when a multicast data packet is sent to a terminal through a broadcast channel, an amount of sent data is small because of limited bandwidth of the broadcast channel.

Compared with the existing eMBMS technology, in this embodiment of this application, multicast communication between terminals is supported. In addition, deployment of modules supporting eMBMS on the access network device 10 and the terminal is not needed, thereby reducing deployment, operation, and maintenance costs.

Optionally, when the terminal 20 needs to leave a second multicast group, procedures of processing performed by the access network device 10 may be as follows.

Step 1: The access network device 10 receives a multicast leaving packet that corresponds to the second multicast group and that is sent by the terminal 20.

The multicast leaving packet may carry an identifier of the second multicast group and the identifier of the terminal 20.

During implementation, when the terminal 20 does not need to receive service data of the second multicast group, the terminal 20 may send the multicast leaving packet to the access network device 10 by using an application. For the multicast leaving packet, a source address may be the IP address of the terminal 20, a destination address may be 224.0.0.2, a protocol type may be the IGMP protocol, and a multicast type may be 0x17 (that is, a multicast leaving packet). The multicast leaving packet carries the identifier of the second multicast group and the identifier of the terminal 20. After receiving the multicast leaving packet, the TOF module of the access network device 10 may determine whether the destination address of the multicast leaving packet is the multicast address. If the destination address of the multicast leaving packet is the multicast address, the TOF module forwards the multicast leaving packet to the control module. The control module parses the multicast leaving packet to obtain the identifier of the second multicast group and the identifier of the terminal 20 that are carried in the multicast leaving packet.

Step 2: The access network device 10 deletes a correspondence between the identifier of the second multicast group and the tunnel identifier of the terminal 20 from a multicast mapping table.

During implementation, the control module of the access network device 10 may pre-store an identifier mapping table between an identifier of a terminal and a tunnel identifier of the terminal. After obtaining the identifier of the terminal 20 carried in the multicast leaving packet, the control module of the access network device 10 may query, in the identifier mapping table based on the identifier of the terminal 20, the tunnel identifier of the terminal 20. Then, the control module may query whether a correspondence between the identifier of the second multicast group and the tunnel identifier of the terminal 20 exists in the multicast mapping table. If the correspondence between the identifier of the second multicast group and the tunnel identifier of the terminal 20 does not exist in the multicast mapping table, no processing is performed. If the correspondence between the identifier of the second multicast group and the tunnel identifier of the terminal 20 exists in the multicast mapping table, the control module deletes the correspondence between the identifier of the second multicast group and the tunnel identifier of the terminal 20 from the multicast mapping table. The identifier of the terminal 20 is the address of the terminal 20. For example, as shown in Table 4, the multicast mapping table stores a mapping relationship between the address of the second multicast group (that is, 224.0.1.2) and the tunnel identifier of the terminal 20 (that is, telnet 1), a mapping relationship between the address of the second multicast group (that is, 224.0.1.2) and a tunnel identifier of the terminal 30 (that is, telnet 2), and a mapping relationship between the address of the second multicast group (that is, 224.0.1.2) and a tunnel identifier of the terminal 40 (that is, telnet 3). After obtaining the identifier of the second multicast group (that is, 224.0.1.2) carried in the multicast leaving packet and the tunnel identifier of the terminal 20 (that is, telnet 1), the control module may delete the correspondence between the address of the second multicast group and the tunnel identifier of the terminal 20.

**Table 4**

| Multicast group address | Terminal tunnel identifier |
|---|---|
| 224.0.1.2 | telnet 2 |
| 224.0.1.2 | telnet 3 |
| 224.0.1.2 | telnet 1 |

It should be noted that, the access network device 10 may include a DU and a CU, and the data transmission method provided in this embodiment of this application may be applied to the CU, or may be applied to the DU. When the method is applied to the CU, tunnel encapsulation needs to be performed on a packet transmitted between the DU and the CU. A GTP tunnel protocol or another tunnel protocol may be selected for tunnel encapsulation. This is not limited in this application. Specifically, processing procedures of packet transmission between the DU and the CU are as follows.

When a terminal sends a multicast joining packet to the DU, after receiving the multicast joining packet, the DU may perform tunnel encapsulation on the multicast joining packet according to a preset tunnel encapsulation policy to obtain a tunnel packet, and send the tunnel packet to the CU. After receiving the tunnel packet, a TOF module of the CU performs tunnel decapsulation on the tunnel packet to obtain the multicast joining packet, and sends the multicast joining packet to a control module.

Similarly, when the terminal sends a multicast data packet to the DU, after receiving the multicast data packet, the DU performs tunnel encapsulation on the multicast data packet according to the preset tunnel encapsulation policy to obtain a tunnel packet, and sends the tunnel packet to the CU. After receiving the tunnel packet, the TOF module of the CU performs tunnel decapsulation on the tunnel packet to obtain the multicast data packet, and sends the multicast data packet to the control module.

Similarly, after obtaining a tunnel identifier of the terminal, the control module of the CU may further determine, based on the tunnel identifier of the terminal, a corresponding DU and a tunnel encapsulation policy corresponding to the DU. Then, the control module may perform tunnel encapsulation on the multicast data packet according to the tunnel encapsulation policy, to obtain a tunnel packet, and send the tunnel packet to the TOF module. The tunnel packet carries the tunnel identifier of the terminal. After receiving the tunnel packet, the TOF module may send the tunnel packet to the corresponding DU based on a destination address of the tunnel packet. After receiving the tunnel packet, the DU may perform tunnel decapsulation processing on the tunnel packet, to obtain the multicast data packet and the tunnel identifier of the terminal, and send, through a unicast channel, the multicast data packet to a corresponding terminal based on the tunnel identifier of the terminal.

In addition, the tunnel identifier of the terminal may be encapsulated in a header of the tunnel packet, or may be encapsulated in a data payload part of the tunnel packet. This is not limited in this application.

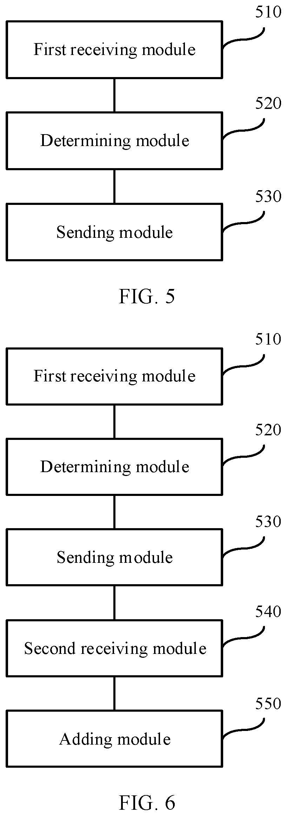

Based on a same technical concept, an embodiment of this application further provides a wireless communications apparatus. The wireless communications apparatus may be the access network device 10 or a chip in the access network device 10. As shown in FIG. 5, the wireless communications apparatus includes:
a first receiving module 510, configured to receive a multicast data packet from a first terminal, where the multicast data packet includes service data and an identifier of a first multicast group;
a determining module 520, configured to determine an identifier of a second terminal based on the identifier of the first multicast group and a correspondence between the identifier of the first multicast group and the identifier of the second terminal; and
a sending module 530, configured to send the service data to the second terminal based on the identifier of the second terminal.

In a possible implementation, the identifier of the first multicast group is an IP address of the first multicast group, and the identifier of the second terminal is an IP address of the second terminal.

In a possible implementation, the sending module 530 is specifically configured to:
change a destination IP address of the multicast data packet to the IP address of the second terminal, to obtain a unicast packet, where the unicast packet includes the service data; and
send the unicast packet to the second terminal based on the IP address of the second terminal.

In a possible implementation, the identifier of the first multicast group is an IP address of the first multicast group, and the identifier of the second terminal is a GTP tunnel address of the second terminal.

The sending module 530 is specifically configured to:
send the multicast data packet to the second terminal based on the GTP tunnel address of the second terminal.

In a possible implementation, the wireless communications apparatus is a central unit CU.

In a possible implementation, as shown in FIG. 6, the wireless communications apparatus further includes:
a second receiving module 540, configured to receive a multicast joining packet from the second terminal, where the multicast joining packet includes the identifier of the first multicast group and the identifier of the second terminal; and
an adding module 550, configured to add, based on the identifier of the first multicast group and the identifier of the second terminal, the correspondence between the identifier of the first multicast group and the identifier of the second terminal.

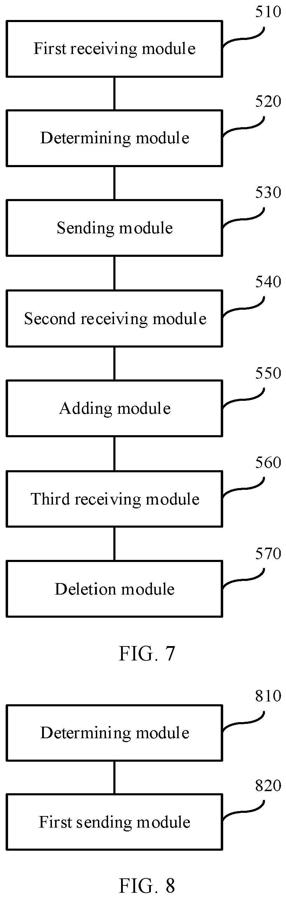

In a possible implementation, as shown in FIG. 7, the wireless communications apparatus further includes:
a third receiving module 560, configured to receive a multicast leaving packet from the second terminal, where the multicast leaving packet includes the identifier of the first multicast group and the identifier of the second terminal; and
a deletion module 570, configured to delete, based on the identifier of the first multicast group and the identifier of the second terminal, the correspondence between the identifier of the first multicast group and the identifier of the second terminal.

In a possible implementation, there are a plurality of second terminals.

In the embodiments of this application, the first receiving module 510 receives the multicast data packet from the first terminal, where the multicast data packet includes the service data and the identifier of the first multicast group; the determining module 520 determines the identifier of the second terminal based on the identifier of the first multicast group and the correspondence between the identifier of the first multicast group and the identifier of the second terminal; and then the sending module 530 sends the service data to the second terminal based on the identifier of the second terminal. In this way, deployments of modules supporting eMBMS on the wireless communications apparatus and the terminal is not needed, thereby reducing deployment, operation, and maintenance costs.

Based on a same technical concept, an embodiment of this application further provides a wireless communications apparatus. The wireless communications apparatus may be the terminal 20 or a chip in the terminal 20. As shown in FIG. 8, the wireless communications apparatus includes:
a determining module 810, configured to determine a multicast data packet; and
a first sending module 820, configured to send the multicast data packet to an access network device, where the multicast data packet includes service data and an identifier of a first multicast group, and the multicast data packet is to be sent to a member of the first multicast group in a unicast manner.

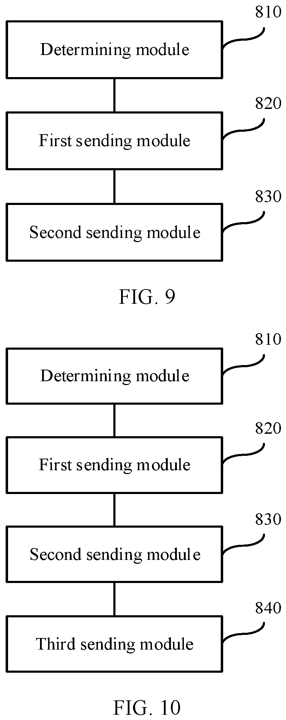

In a possible implementation, as shown in FIG. 9, the wireless communications apparatus further includes:
a second sending module 830, configured to send a multicast joining packet to the access network device, where the multicast joining packet carries the identifier of the first multicast group and an identifier of the wireless communications apparatus, and the multicast joining packet is used for adding the wireless communications apparatus to the first multicast group.

In a possible implementation, as shown in FIG. 10, the wireless communications apparatus further includes:
a third sending module 840, configured to send a multicast leaving packet to the access network device, where the multicast leaving packet carries the identifier of the first multicast group and an identifier of the wireless communications apparatus, and the multicast leaving packet is used for deleting the wireless communications apparatus from the first multicast group.

In a possible implementation, there are a plurality of members in the first multicast group.

In this embodiment of this application, the first receiving module 820 receives a multicast data packet sent by a multicast source, where the multicast data packet carries to-be-transmitted service data and the identifier of the first multicast group; the determining module 830 determines, based on the identifier of the first multicast group and a pre-stored multicast mapping table, an identifier of a first multicast member corresponding to the first multicast group; and the sending module 840 sends the service data to the first multicast member based on the identifier of the first multicast member. In this way, deployments of modules supporting eMBMS on a CU, DU, and terminal is not needed, thereby reducing deployment, operation, and maintenance costs.

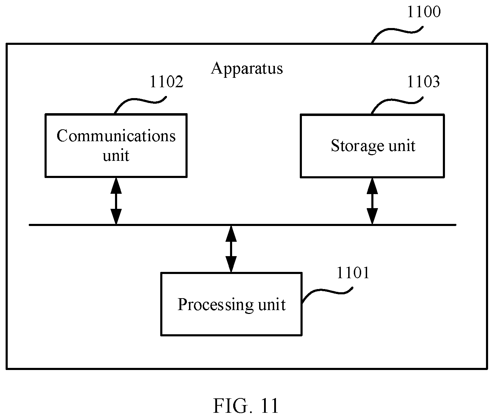

Based on a same technical concept, an embodiment of this application further provides an apparatus 1100. As shown in FIG. 11, the apparatus 1100 includes a processing unit 1101 and a communications unit 1102. Optionally, the apparatus further includes a storage unit 1103. The processing unit 1101, the communications unit 1102, and the storage unit 1103 are connected through a communications bus.

The communications unit 1102 may be an apparatus having sending and receiving functions, and is configured to communicate with another network device or a communications network.

The storage unit 1103 may include one or more memories. The memory may be a component that is in one or more devices or circuits and that is configured to store a program or data.

The storage unit 1103 may exist independently, and is connected to the processing unit 1101 through the communications bus. The storage unit may alternatively be integrated with the processing unit 1101.

The apparatus 1100 may be applied to a network device, a circuit, a hardware component, or a chip.

The apparatus 1100 may be a terminal in the embodiments of this application, for example, the terminal 20. A schematic diagram of the terminal may be shown in FIG. 1c. Optionally, a communications unit 1003 of the apparatus 1100 may include an antenna and a transceiver of the terminal, for example, an antenna 26 and a transceiver 22 in FIG. 1c. Optionally, the communications unit 1003 may further include an output device and an input device, for example, an output device 24 and an input device 25 in FIG. 1c.

The apparatus 1100 may be a chip in a terminal in the embodiments of this application, for example, a chip in the terminal 20. The communications unit 1003 may be an input or output interface, an input or output pin, an input or output circuit, or the like. Optionally, the storage unit may store a computer executable instruction used for implementing a method on a terminal side, so that the processing unit 1101 performs the methods on the terminal side in the foregoing embodiments. The storage unit 1103 may be a register, a cache, an RAM, or the like, and the storage unit 1103 may be integrated with the processing unit 1101; or the storage unit 1103 may be an ROM or another type of static storage device that can store static information and instructions, and the storage unit 1103 may be independent of the processing unit 1101. Optionally, as wireless communications technologies develop, a transceiver may be integrated onto the apparatus 1100. For example, the transceiver 22 is integrated into the communications unit 1003.

When the apparatus 1100 is a terminal or a chip in a terminal in the embodiments of this application, the apparatus 1100 may implement the methods performed by the terminal in the foregoing embodiments. The processing unit 1101 may send a multicast data packet to the access network device 10. The multicast data packet includes service data and an identifier of a first multicast group, and the multicast data packet is used by the access network device 10 to determine an identifier of a second terminal based on the identifier of the first multicast group and a correspondence between the identifier of the first multicast group and the identifier of the second terminal, and to send the service data to the second terminal based on the identifier of the second terminal. The apparatus may further implement another method performed on the terminal side.

The apparatus 1100 may alternatively be an access network device in the embodiments of this application, for example, the access network device 10. A schematic diagram of the access network device may be shown in FIG. 1b. Optionally, a communications unit 1003 of the apparatus 1100 may include an antenna and a transceiver of the access network device, for example, an antenna 15 and a transceiver 13 in FIG. 1c. The communications unit 1003 may further include a network interface of the access network device, for example, a network interface 14 in FIG. 1b.

The apparatus 1100 may be a chip in an access network device in the embodiments of this application, for example, a chip in the access network device 10. The communications unit 1003 may be an input or output interface, an input or output pin, an input or output circuit, or the like. Optionally, the storage unit may store a computer executable instruction used for implementing a method on an access network device side, so that the processing unit 1101 performs the methods on the access network device side in the foregoing embodiments. The storage unit 1103 may be a register, a cache, an RAM, or the like, and the storage unit 1103 may be integrated with the processing unit 1101; or the storage unit 1103 may be an ROM or another type of static storage device that can store static information and instructions, and the storage unit 1103 may be independent of the processing unit 1101. Optionally, with development of the wireless communications technologies, a transceiver may be integrated onto the apparatus 1100. For example, the transceiver 13 and the network interface 14 are integrated into the communications unit 1003.

When the apparatus 1100 is an access network device or a chip in an access network device in the embodiments of this application, the apparatus 1100 may implement the methods performed by the access network device in the foregoing embodiments. The processing unit 1101 may receive a multicast data packet from a first terminal, where the multicast data packet includes service data and an identifier of a first multicast group; determine an identifier of a second terminal based on the identifier of the first multicast group and a correspondence between the identifier of the first multicast group and the identifier of the second terminal; and send the service data to the second terminal based on the identifier of the second terminal. For details, refer to related content in step 201 to step 203 in FIG. 2. Details are not described herein again.

An embodiment of this application further provides a computer readable storage medium. The methods described in the foregoing embodiments may be implemented completely or partially by using software, hardware, firmware, or any combination thereof. If a function is implemented in software, the function may be stored or transferred, as one or more instructions or code, on the computer-readable medium. The computer-readable medium may be a computer storage medium or a communications medium, or may be any medium that can transfer a computer program from one location to another. The storage medium may be any usable medium accessible to a computer.

In an optional design, the computer-readable medium may be an RAM, an ROM, an EEPROM, a CD-ROM or another optical disc memory, a magnetic disk memory or another magnetic storage device, or any other medium that may be used for carrying or used for storing required program code in a form of an instruction or a data structure and that can be accessed by a computer. Moreover, any connection may be appropriately referred to as a computer-readable medium. For example, if a coaxial cable, an optical fiber cable, a twisted pair, a digital subscriber line (DSL) or a wireless technology (such as infrared, radio, and microwave) is used to transfer software from a website, a server, or another remote source, the coaxial cable, the optical fiber cable, the twisted pair, the DSL, or the wireless technology such as radio and microwave is included in the definition of the medium. The magnetic disk and the optical disc used in this specification include a compact disc (CD), a laser disc, an optical disc, a digital versatile disc (DVD), a floppy disk, and a Blu-ray disc. The magnetic disk usually reproduces data magnetically, and the optical disc optically reproduces data by using a laser. A combination thereof should also be included in the scope of the computer-readable medium.

An embodiment of this application further provides a computer program product. The methods described in the foregoing embodiments may be implemented completely or partially by using software, hardware, firmware, or any combination thereof. If a method is implemented in software, the method may be completely or partially implemented in a form of a computer program product. The computer program product includes one or more computer instructions. When the computer program instructions are loaded and executed on the computer, the procedures or functions described in the foregoing method embodiments are completely or partially implemented. The computer may be a general-purpose computer, a special-purpose computer, a computer network, a network device, user equipment, or another programmable apparatus.

The objectives, technical solutions, and beneficial effects of the present invention are further described in detail in the foregoing specific embodiments. It should be understood that the foregoing descriptions are merely specific implementations of the present invention, but are not used to limit the protection scope of the present invention. Any modification, equivalent replacement, or improvement made on the basis of the technical solutions of the present invention shall fall within the protection scope of the present invention.

## Claims

1. A data transmission method, wherein the method comprises:
receiving, by a wireless communications apparatus, a multicast data packet from a first terminal, wherein the multicast data packet comprises service data and an identifier of a first multicast group;
determining, by the wireless communications apparatus, an identifier of a second terminal based on the identifier of the first multicast group and a correspondence between the identifier of the first multicast group and the identifier of the second terminal; and
sending, by the wireless communications apparatus, the service data to the second terminal based on the identifier of the second terminal.

2. The method according to claim 1, wherein the identifier of the first multicast group is an internet protocol IP address of the first multicast group, and the identifier of the second terminal is an IP address of the second terminal.

3. The method according to claim 2, wherein the sending, by the wireless communications apparatus, the service data to the second terminal based on the identifier of the second terminal comprises:
changing, by the wireless communications apparatus, a destination IP address of the multicast data packet to the IP address of the second terminal, to obtain a unicast packet, wherein the unicast packet comprises the service data; and
sending, by the wireless communications apparatus, the unicast packet to the second terminal based on the IP address of the second terminal.

4. The method according to claim 1, wherein the identifier of the first multicast group is an IP address of the first multicast group, and the identifier of the second terminal is a GTP tunnel address of the second terminal; and
the sending the service data to the second terminal comprises:
sending the multicast data packet to the second terminal based on the GTP tunnel address of the second terminal.

5. The method according to any one of claims 1 to 4, wherein the wireless communications apparatus is a central unit CU.

6. The method according to any one of claims 1 to 5, wherein the method further comprises:
receiving, by the wireless communications apparatus, a multicast joining packet from the second terminal, wherein the multicast joining packet comprises the identifier of the first multicast group and the identifier of the second terminal; and
adding, by the wireless communications apparatus based on the identifier of the first multicast group and the identifier of the second terminal, the correspondence between the identifier of the first multicast group and the identifier of the second terminal.

7. The method according to any one of claims 1 to 6, wherein the method further comprises:
receiving, by the wireless communications apparatus, a multicast leaving packet from the second terminal, wherein the multicast leaving packet comprises the identifier of the first multicast group and the identifier of the second terminal; and
deleting, by the wireless communications apparatus based on the identifier of the first multicast group and the identifier of the second terminal, the correspondence between the identifier of the first multicast group and the identifier of the second terminal.

8. The method according to any one of claims 1 to 7, wherein there are a plurality of second terminals.

9. A data transmission method, wherein the method comprises:
determining, by a wireless communications apparatus, a multicast data packet; and
sending, by the wireless communications apparatus, the multicast data packet to an access network device, wherein the multicast data packet comprises service data and an identifier of a first multicast group, and the multicast data packet is to be sent to a member of the first multicast group in a unicast manner.

10. The method according to claim 9, wherein the method further comprises:
sending, by the wireless communications apparatus, a multicast joining packet to the access network device, wherein the multicast joining packet carries the identifier of the first multicast group and an identifier of the wireless communications apparatus, and the multicast joining packet is used for adding the wireless communications apparatus to the first multicast group.

11. The method according to claim 9, wherein the method further comprises:
sending, by the wireless communications apparatus, a multicast leaving packet to the access network device, wherein the multicast leaving packet carries the identifier of the first multicast group and an identifier of the wireless communications apparatus, and the multicast leaving packet is used for deleting the wireless communications apparatus from the first multicast group.

12. The method according to claim 9, wherein there are a plurality of members in the first multicast group.

13. An apparatus, comprising a memory and a processor, wherein the memory is configured to store a computer program, and the processor is configured to invoke the computer program from the memory and execute the computer program, so that the wireless communications apparatus performs the method according to any one of claims 1 to 12.

14. A computer storage medium, storing a program, wherein the program is used to implement the method according to any one of claims 1 to 12.
